Europäisches Patentamt

European Patent Office

Office européen des brevets

(11) Publication number: **0 210 049**
**A2**

## (12) EUROPEAN PATENT APPLICATION

(21) Application number: 86305489.6

(22) Date of filing: 16.07.86

(51) Int.Cl.⁴: **E 06 B 9/24**

(30) Priority: 22.07.85 JP 160118/85
26.09.85 JP 211182/85
09.10.85 JP 153696/85 U
08.04.86 JP 79223/86

(43) Date of publication of application:
28.01.87 Bulletin 87/5

(84) Designated Contracting States:
DE FR GB

(71) Applicant: KURON CORPORATION
6-12, Kanemecho 2-chome
Nagaoka-shi Niigata-ken(JP)

(72) Inventor: Ando, Itiyano
5353 Shingumicho
Nagaoka-shi Niigata-ken(JP)

(72) Inventor: Shinoda, Toru
2-4-29 Chiyagawa
Ojiya-shi Niigata-ken(JP)

(74) Representative: Hughes, Brian Patrick et al,
Graham Watt & Co. Riverhead
Sevenoaks, Kent TN13 2BN(GB)

(54) Blind apparatus of the light tracking type.

(57) The present invention relates to a blind apparatus of the light tracking type and comprises an intensity detector portion (D) for detecting the amount of light illuminance and a light direction detector portion (P) for detecting the direction from which light is coming. By processing the respective signals from these detecting portions, rotation angles of the blades of the blind apparatus are controlled. Therefore, the blades of the blind apparatus can be automatically adjusted so as to always become most perpendicualr to the direct rays of the sun or other sources of light.

FIG.1

EP 0 210 049 A2

BLIND APPARATUS OF THE LIGHT TRACKING TYPE

TECHNICAL FIELD

The present invention relates to a blind apparatus which is attached to windows and so on and, more particularly, to a blind apparatus of the light tracking type in which a group of blades of the blind track so as to face the direction of the incident light, mainly, in the direction of solar light, thereby automatically adjusting the angle, i.e., direction of the blades.

BACKGROUND ART

Hitherto, in a blind which is attached to a window and can be freely opened and closed as a whole, the angle, i.e., direction of a group of blades of the blind are adjusted manually by use of an operating cord, in accordance with the intensity of solar light and the position of the sun.

When shielding the direct rays of the sun by using a group of blades of the blind, the angle of incident light for the group of blades varies in the morning and in the afternoon. It is therefore an object of the present invention to shield against intense light throughout the day by detecting the position of the sun and thereby automatically adjusting the angle of the group of blades.

In the case of shielding against the direct rays of the sun by use of a group of blades of the blind, the angle of incident light for the group of blades varies depending on the direction of the sun. It is therefore another object of the invention to enable the tilting operation to be performed so that the group of blades become substantially perpendicular to the incident light of the sun, by tracking and detecting the direction of the sun thereby automatically adjusting the direction of the group of blades.

According to the blind apparatus of the light tracking type, the intensity and direction of the light are detected, the rotating direction of the blades of the blind is designated, and the blades are driven in the rotating direction. It is another object of the invention to provide a blade driving apparatus which is interlocked with a direction detecting portion in such a tracking type blind apparatus.

Still another object of the invention is to provide a sensor to detect the direction of light, such as a solar light, which is suitable for use in the light tracking type blind apparatus.

- 3 -

Still another object of the invention is to provide a light tracking type blind apparatus which can reduce the number of parts by use of the foregoing light direction sensor and can also decrease the steps involved in attaching it.

DISCLOSURE OF INVENTION

A blind apparatus of the light tracking type according to the present invention comprises: an intensity detector portion for detecting the intensity of the light; a light direction detector portion for detecting the direction of the light; a signal processing means for receiving and processing respective signals from the light direction detector portion and the intensity detector portion and outputting a signal to control the angle of rotation of blades of a blind; and a blade driving section for receiving the rotating angle control signal and rotating the blades, when the direct rays of the solar light enter, the direction of the solar light is detected and the blades of the blind can be automatically adjusted such that they always become substantially perpendicular to the incident light.

An apparatus for adjusting the angle of blades of the blind according to the invention comprises: an intensity detector portion for detecting the intensity of solar light; an intensity comparing portion for comparing the detection signal from the intensity detector portion with a reference signal corresponding to a desired intensity; a position detector portion for detecting the position of the sun; means for respectively receiving a signal from the intensity comparing portion and a signal from the position detecting section and outputting a signal to designate the angle of blades of a blind; and a blade driving section for receiving the signal to designate the angle of the blades and adjusting the angle of the blades, wherein the angle of the group of blades of the blind can be automatically adjusted in accordance with the intensity of solar light and the position of the sun.

A tracking type blind apparatus according to the invention comprises: an intensity detector portion for detecting the intensity of the light; an intensity comparing portion for comparing the detection signal from the intensity detector portion with a reference signal corresponding to a desired intensity; direction detecting portion for detecting and tracking the direction of the light; means for respectively receiving and processing a signal from the intensity comparing portion and a signal from the direction detector portion and outputting a signal to designate the rotating direction of the blades of the blind; and a blade driving section for receiving the signal to designate the rotating direction of the blades and driving the blades in the rotating direction. Therefore, in the case where the direct rays of the solar light enter, the direction of the solar light is detected and the tilting operation can be automatically performed such that the blades always become substantially perpendicular to the incident light.

A blind blade driving apparatus of the tracking type blind according to the present invention comprises: an intensity detector portion for detecting the intensity of the light; an intensity comparing portion; a tracking apparatus; and a direction detecting portion consisting of a photoconductive cell adapted to rotate in an interlocking manner by only the same amount of rotation as the tilt amount of each blade due to the tilt driving force of the blades and a reference lamp for illuminating the photoconductive cell, wherein this apparatus is characterized in that the foregoing driving force is transmitted to the photoconductive cell through a worm and a wheel by the same rotation amount as that of the blind blades.

Therefore, the intensity and direction of solar light or the like are detected and the blades of the blind are tilted by the driving means so as to track the direction of the light, thereby enabling the rotation amount of the photoconductive cell of the direction detector portion and of the blade to be adjusted to the same amount through the worm and wheel.

A light direction sensor according to the invention comprises: a first photosensor, the output of which varies in depending on the incident light; and a second photosensor which has the same characteristics as the first and is arranged so that its central axis intersects the central axis of the first photosensor. Therefore, by processing the outputs of these photosensors, the direction of the light can be calculated irrespective of its intensity.

Further, a light tracking type blind apparatus according to the invention comprises: a light amount detector portion for detecting and digitizing the amount of light; a light direction detector portion for detecting and digitizing the direction of the light; a signal processing unit for receiving and processing respective digital signals from the light direction detector portion and the light amount detector portion and outputting a signal to control the angle of rotation of the blades of a blind; and a blade driving section for receiving the control signal of the rotation angle and rotating the blades. Therefore, in particular, the light direction detector portion can be attached very easily and at the same time, the mechanism is also simplified, thereby enabling the efficiency of the working steps to be improved and the number of parts to be reduced.

BRIEF DESCRIPTION OF DRAWINGS

Fig. 1 is a block diagram showing the first embodiment of a light tracking type blind apparatus according to the present invention;

Fig. 2 is a diagram for explaining the first embodiment;

Fig. 3 is a flowchart for explaining the embodiment of Fig. 1;

Fig. 4 is a block diagram showing the main part of the second embodiment of a light tracking type blind apparatus according to the invention;

Fig. 5 is a flowchart for explaining the embodiment of Fig. 4;

Fig. 6 is a block diagram showing the main part of the third embodiment of a light tracking type blind apparatus according to the invention;

Fig. 7 is a perspective view showing a blind blade driving apparatus in Fig. 6;

Fig. 8 is a front view and a circuit diagram showing the first embodiment of a light direction sensor according to the invention;

Fig. 9 is a block diagram showing the fourth embodiment of a light tracking type blind apparatus according to the invention;

Fig. 10 is a block diagram showing the second embodiment of a light direction sensor according to the invention; and

Fig. 11 is a block diagram showing the third embodiment of a light direction sensor according to the invention.

## BEST MODE FOR CARRYING OUT THE INVENTION

The present invention will now be described below with respect to the embodiment with reference to the drawings.

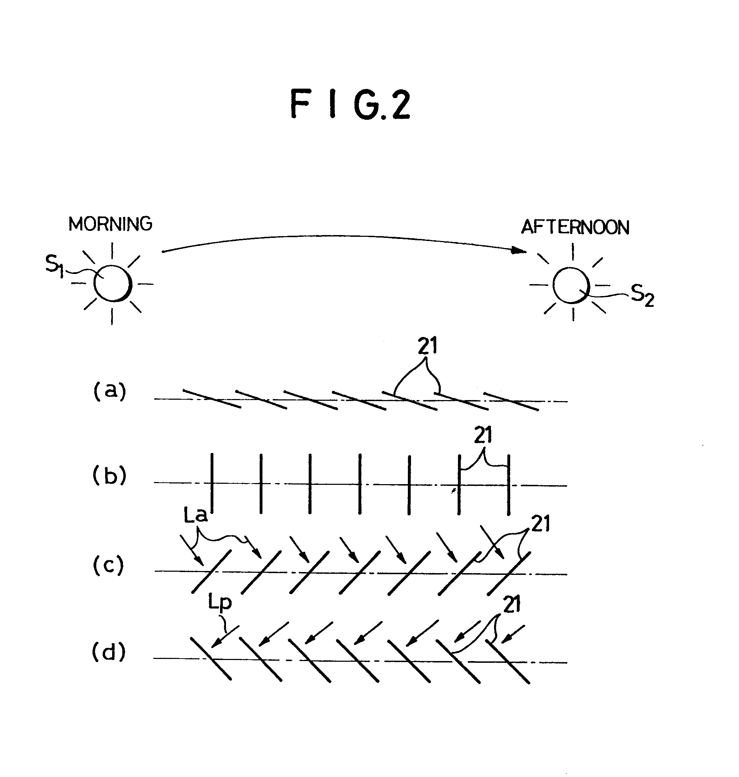

Prior to describing the embodiment, an explanation will be first made with regard to Fig. 2. An explanatory diagram illustrated in Fig. 2 shows four states of a plurality of slats or blades 21 constituting, for example, a vertical blind. Fig. 2(a) shows the state in which all of the blades 21 are closed and corresponds to, for example, the state of the blind at night, or in the afternoon. Fig. 2(b) shows the state in which all of the blades 21 are open and corresponds to, for example, the state of the blind in the morning, in the evening, on a rainy or cloudy day, or other situations where subdued light enters. Fig. 2(c) shows the state in which the right half portion of the blades 21 is open and corresponds to, for example, the tracking state for solar light $L_a$ in the morning. Fig. 2(d) shows the state in which the left half portion of the blades 21 is open and corresponds to, for example, the tracking state for solar light $L_p$ in the afternoon.

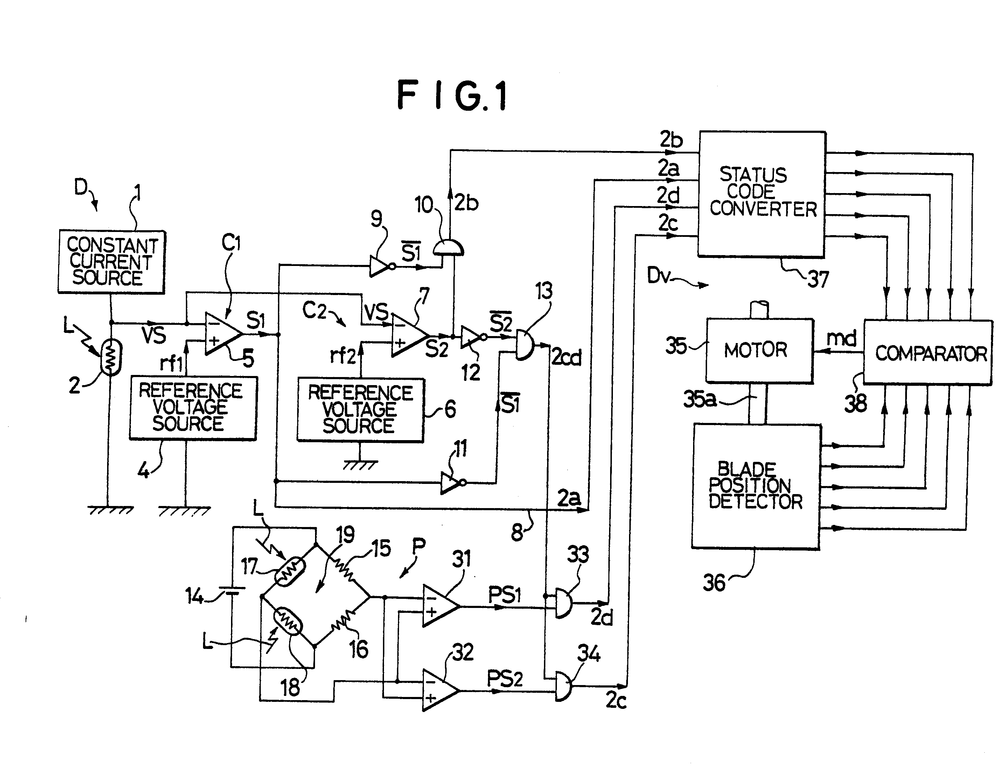

The first embodiment according to the present invention will now be described with reference to a block diagram shown in Fig. 1.

An intensity detector portion D at the left upper location in Fig. 1 comprises a constant current source 1 and a photoconductive cell 2 such as a CdS or the like which is connected between the constant current source 1 and the ground and outputs a voltage signal vs in accordance with the intensity of light L of the sun ($S_1$, $S_2$).

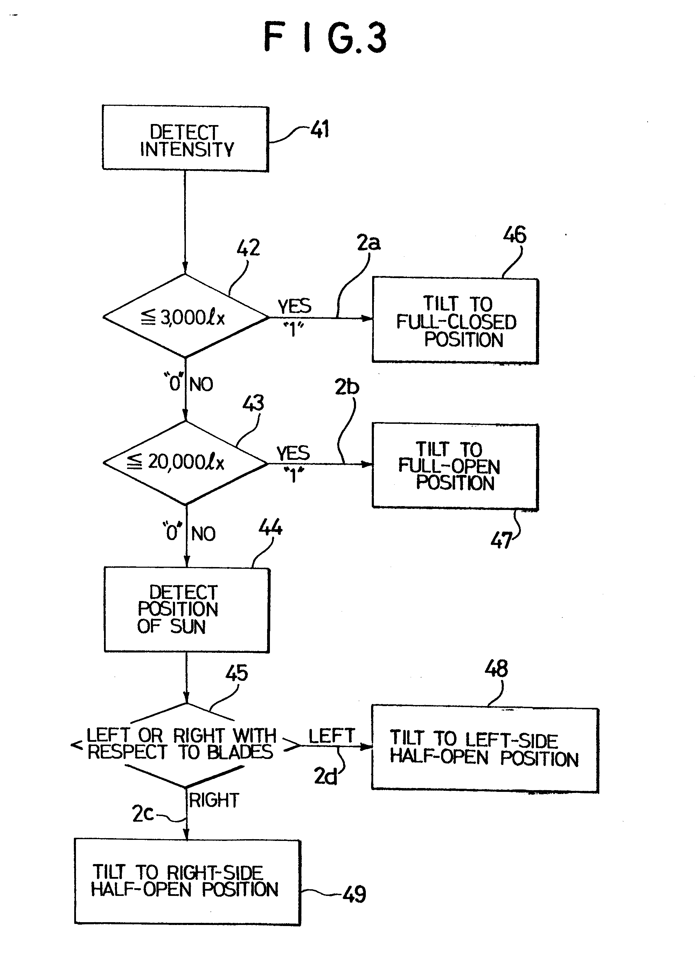

A first intensity comparing portion $C_1$ comprises: a first reference voltage source 4 for outputting a first reference voltage signal $rf_1$ corresponding to the first reference intensity of, e.g., 3,000 lux; and a first comparator 5 for receiving both the voltage signal vs and the first reference voltage signal $rf_1$ and comparing them and generating an output voltage signal $s_1$ which becomes a logic level of "1" (YES) when vs is smaller than $rf_1$ and "0" (NO) when vs is larger than $rf_1$ as shown in Fig. 3.

A second intensity comparing portion $C_2$

comprises: a second reference voltage source 6 for outputting a second reference voltage signal $rf_2$ corresponding to the second reference intensity of, e.g., 20,000 lux; and a second comparator (7) for receiving both the voltage signal vs and the second reference voltage signal $rf_2$ and comparing them and generating an output voltage signal $s_2$ which becomes a logic level of "1" (YES) when vs is smaller than $rf_2$ and "0" (NO) when vs is larger than $rf_2$ as shown in Fig. 3.

An electric wire 8 is connected to an output terminal of the first comparator 5. When the output signal $s_1$ is at logic level "1", a signal 2a for fully-closing tilt to effect the fully-closed state of Fig. 2(a) is output.

An inverter 9 receives the signal $s_1$ and outputs an inverted signal $\overline{s_1}$. An AND gate 10 receives the inverted signal $s_1$ and also receives the signal $s_2$ of the second comparator 7 and outputs a signal 2b for full-opening tilt to effect the fully-open state of Fig. 2(b) when the AND level is "1".

An inverter 11 receives the signal $s_1$ and outputs the inverted signal $\overline{s_1}$. An inverter 12 receives the signal $s_2$ and outputs an inverted signal $\overline{s_2}$. An AND gate 13 receives the inverted signals $\overline{s_1}$ and $\overline{s_2}$, respectively, and outputs a signal 2cd for half-closing tilt to effect the half-open states of Figs. 2(c) and 2(d) when the AND level is "1".

A position detecting portion P of the sun $(S_1, S_2)$ comprises: a DC power supply 14; two resistors 15 and 16 which are connected in series with the DC power supply 14; a photoconductive cell 17 which is used for the right side, i.e., west side; and a photoconductive cell 18 which is used for the left side, i.e., east side. These two resistors 15 and 16 and two photoconductive cells 17 and 17 constitute a bridge circuit 19.

A first polarity discriminating device 31 is connected between the node of the resistors 15 and 16 and the node of the photoconductive cells 17 and 18 and outputs a signal $ps_1$ for the first position when, for example, the sun $S_2$ is located on the west side. A second polarity discriminating device 32 is connected between the node of the photoconductive cells 17 and 18 and the node of the resistors 15 and 16 and outputs a signal $ps_2$ for the second position when, for example, the sun $S_1$ is located on the east side.

In other words, when the incident amounts of solar light L to the photoconductive cells 17 and 18 which face the right and left sides are out of balanced, an output voltage is produced in the bridge circuit 19, thereby detecting the position of the sun on the basis of the polarity of this output voltage.

An AND gate 33 receives the signal 2cd for half-closing tilt and the signal $ps_1$ for the first position, respectively, and outputs a signal 2d for left-side half-opening tilt to effect the left-side half-open state of Fig. 2(d) when the AND level is "1".

An AND gate 34 receives the signal 2cd for half-closing tilt and the signal $ps_2$ for the second position, respectively, and outputs a signal 2c for right-side half-opening tilt to effect the right-side half-open state of Fig. 2(c) when the AND level is "1".

A blade driving portion $D_v$ comprises: a motor 35 for rotating a group of blades 21 in Fig. 2 and driving them at an angle; a blade position detector 36 for detecting the angular position of the blades 21 to be driven by counting the rotating speed of a rotary shaft 35a of the motor 35 or the like, thereby outputting a code; a status code converter 37 for respectively receiving the resultant full-closing tilt signal 2a, full-opening tilt signal 2b, right-side half-opening tilt signal 2c, and left-side half-opening tilt signal 2d mentioned above and outputting a status code signal; and a comparator 38 for receiving both the status code signal from the converter 37 and the code signal from the blade position detector 36 and comparing these signals and outputting a motor driving signal md to the motor 35 only when these code signals do not coincide.

Therefore, when the signals 2a to 2d to effect the tilting state of the blades 21 are input to the converter 37, the status code signal corresponding to the state is output from the converter 37. The motor 35 continuously rotates until the code signal from the detector 36 coincides with the status code signal. When those code signals coincide, the motor 35 stops.

The first embodiment of the present invention as mentioned above operates in a manner as shown in a flowchart of Fig. 3. Namely, the intensity of the sun $(S_1, S_2)$ is detected (step 41). First, a check is made to see if the intensity is below 3,000 lux or not (step 42). If NO, namely, when the intensity is above 3,000 lux, a further check is made to see if the intensity is below 20,000 lux or not (step 43). If NO, namely, when it is above 20,000 lux, the position of the sun is detected (step 44). A check is then made to see if the blades 21 should be tilted on the left side or the right side (step 45).

If YES in step 42, namely, when the intensity is below 3,000 lux, the blades 21 are tilted to the fully-closed position (step 46) as shown in Fig. 2. If YES in step 43, i.e., when the intensity lies within a range from 3,000 to 20,000 lux, the blades 21 are tilted to the full-open position (step 47). If it is determined that the intensity is above 20,000 lux and the sun $S_2$ is located, for instance, on the west side (step 45), the blades 21 are tilted to the right-side half-open position (step 48). If it is determined that the intensity is above 20,000 lux and the sun $S_1$ is located on the east side (step 45), the blades 21 are tilted to the right-side half-open position (step 49).

The above embodiment has been described by assuming four states in Fig. 2. However, it is also possible to further finely adjust the angles of the blades 21. On the other hand, although the right half part of the blades has been closed in the morning and the left half part of the blades has been closed in the afternoon, it is also possible to close the blades fully at about noon.

According to the foregoing first embodiment, the intensity of the solar light and the position of the sun are always detected and the angle of a group of blades of the blind can be automatically adjusted in accordance with the intensity of the solar light and the position of the sun. Therefore, an advantage is that the direct rays of the sun can be automatically shut out throughout the day.

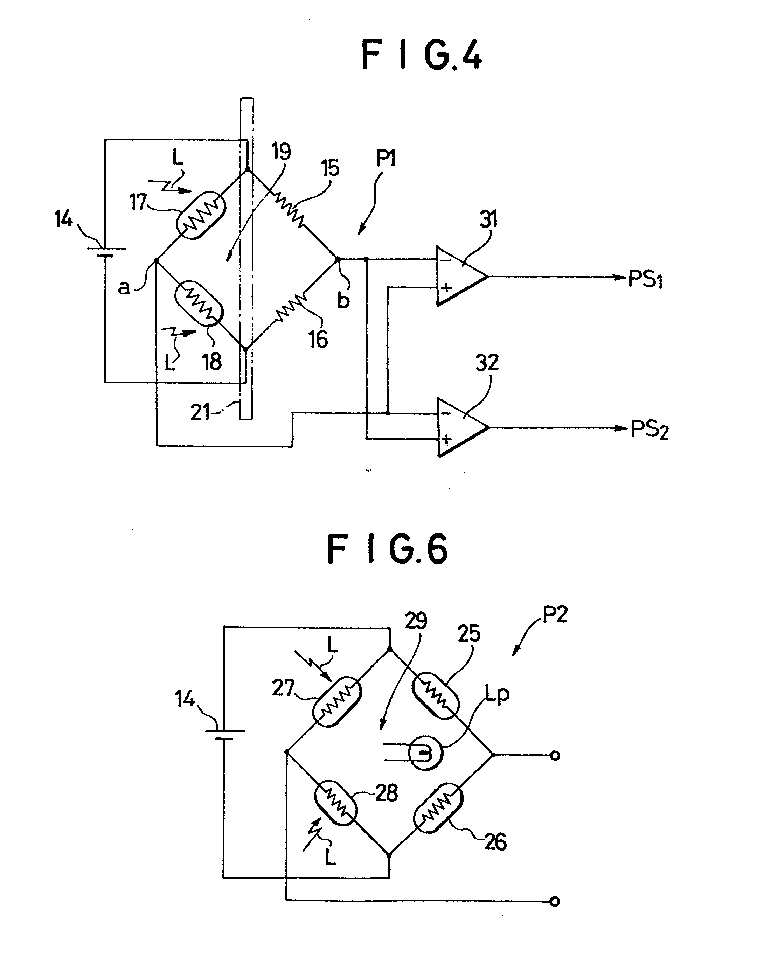

Fig. 4 is a diagram showing the main part of the second embodiment according to the invention and relates to the case where a direction detecting portion $P_1$ is used in place of the position detecting portion P in Fig. 1.

The direction detecting portion $P_1$ to detect the direction of the sun ($S_1$, $S_2$) comprises the DC power supply 14, two resistors 15 and 16 which are connected in series with the DC power supply 14, and a pair of photoconductive cells 17 and 18 which are arranged, for example, for the blades 21. These two resistors 15 and 16 and two photoconductive cells 17 and 18 constitute the bridge circuit 19.

Resistance values $R_1$ and $R_2$ of the resistors 15 and 16 are equal ($R_1 = R_2$). A pair of photoconductive cells 17 and 18 constitute a light direction sensor and need to be arranged, e.g., for the blades 21 in an interlocking manner so as to be subjected to the light under the same conditions as that of the blades 21.

The first polarity discriminating device 31 is connected between the node of the resistors 15 and 16 and the node of the photoconductive cells 17 and 18 and outputs the signal $ps_1$ for the first direction when the sun ($S_1$, $S_2$) is located, for example, on the east side of the vertical planes of the blades 21. The second polarity discriminating device 32 is connected between the node of the photoconductive cells 17 and 18 and the node of the resistors 15 and 16 and outputs the signal $ps_2$ for the second direction when the sun ($S_1$, $S_2$) is located, for instance, on the west side of the vertical planes of the blades 21.

In other words, when the solar light L is not perpendicular to the blades 21, the resistance values of a pair of photoconductive cells 17 and 18 differ, so that a potential difference occurs between points a and b of the bridge circuit 19. Therefore, the direction of the sun is detected on the basis of the polarity of the potential difference.

In the case where the signal $ps_1$ for the first direction in Fig. 4 is input to the AND gate 33 in Fig. 1 in place of the signal $ps_1$ for the first position in Fig. 1, the AND gate 33 receives the signal 2cd for tracking tilt and the signal $ps_1$ for the first direction, respectively, and outputs the signal 2d for the tracking tilt to the left to effect leftward tracking of the blades 21 when the AND level is "1".

In the case where the signal $ps_2$ for the second direction in Fig. 4 is input to the AND gate 34 in Fig. 1 in place of the signal $ps_2$ for the second position in Fig. 1, the AND gate 34 receives the signal 2cd for the tracking tilt and the signal $ps_2$ for the second direction, respectively, and outputs the signal 2c for the tracking tilt to the right to effect rightward tracking of the blades 21 when the AND level is "1".

Therefore, when the signals 2a to 2d to effect the tilting state of the blades 21 are input to the converter 37, the status code signal corresponding to the state is output from the converter 37. The motor 35 rotates until the code signal from the blade direction position detector 36 coincides with the status code signal. When these code signals coincide, the motor 35 stops.

In other words, when the solar light L is not perpendicular to the blades 21, the resistance values of the pair of photoconductive cells 17 and 18 differ. Thus, a potential difference is generated between points a and b of the bridge circuit 19 and a group of blades 21 are rotated so as to reduce the potential difference. When the potential difference between points a and b becomes 0, the rotation of the group of blades 21 is stopped.

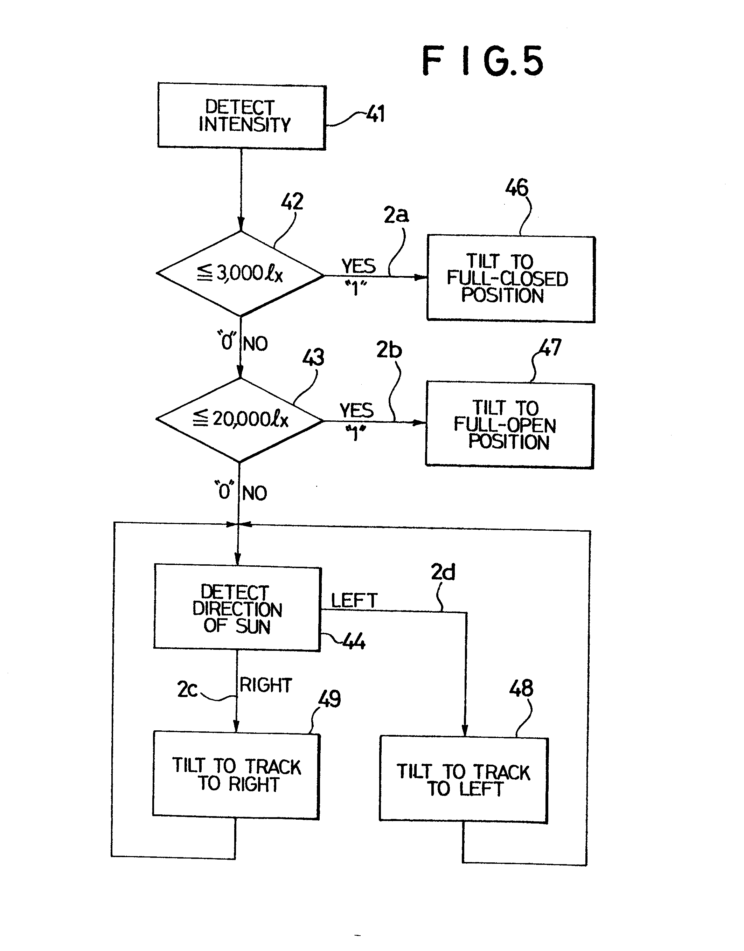

The second embodiment of the present invention mentioned above operates in the manner shown in the flowchart of Fig. 5. Namely, the intensity of the sun ($S_1$, $S_2$) is detected (step 41). First, a check is made to see if the intensity is below 3,000 lux or not (step 42). If NO, namely, when the intensity is above 3,000 lux, a check is further made to see if the intensity is below 20,000 lux or not (step 43). If NO, i.e., when the intensity is above 20,000 lux, the direction of the sun is detected (step 44). A check is then made to see if the blades 21 should be rotated to the left or right (step 45).

If YES, i.e., when the intensity is below 3,000 lux (step 42), the blades 21 are tilted to the fully-closed position (step 46) as shown in Fig. 2. If YES, i.e., when the intensity lies within a range from 3,000 to 20,000 lux (step 43), the blades 21 are tilted to the fully-open position (step 47). If it is determined that the intensity is above 20,000 lux and, for example, the sun $S_1$ is located on the east side of the vertical planes of the blades 21, the blades 21 are tilted to the left (step 48). If it is determined that the intensity is above 20,000 lux and the sun $S_2$ is located on the west side of the vertical planes of the blades 21, the blades 21 are tilted to the right (step 49).

The embodiment has been described in the case where mainly solar light has entered; however, it may also be used with artificial light such as an electric lamp and so on.

According to the present invention as mentioned above, the intensity of the solar light and the direction of the sun are detected and the rotating direction and rotation of a group of blades of the blind can be automatically adjusted in accordance with the intensity of the solar light and the direction of the sun. Therefore, there is the advantage that the direct rays of the sun can automatically be shielded throughout the day irrespective of the direction of the direct rays of the sun.

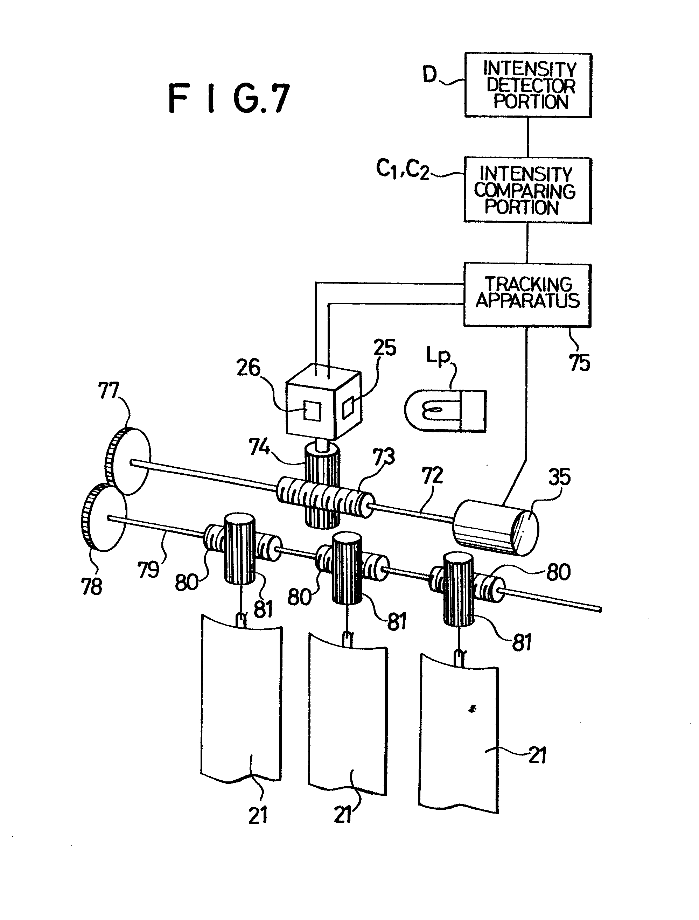

As another embodiment of the direction detecting section $P_1$ of the sun $(S_1, S_2)$, as shown in Fig. 6, it is also possible to use a direction detecting portion $P_2$ of a bridge circuit 29 comprising: the DC power supply 14; a first pair of photoconductive cells 25 and 26 which are connected in series with the DC power supply 14; and a second pair of photoconductive cells 27 and 28 which are likewise connected in series with the DC power supply 14.

In this case, the second pair of photoconductor cells 27 and 28 are fixed to the outside of the window or the like and detect the intensity of the solar light L on the basis of the direction and position of the sun. The first pair of photoconductive cells 25 and 26 are arranged rotatably in a casing or the like and are rotated in an interlocking arrangement with the blades 21 and detect the intensity of the light of a reference lamp $L_p$ fixed in the casing. The first photoconductive cells 25 and 26 serving as internal sensors are rotated to the positions where they achieve the same balance as the second photoconductive cells 27 and 28 serving as external sensors.

Fig. 7 shows an embodiment of a blind blade driving apparatus in consideration of the direction detecting portion as the main part of the third embodiment of Fig. 6.

In this diagram, a shaft 72 is coupled with the drive motor 35. A worm 73 is fitted over the shaft 72. A wheel 74 adapted to engage with the worm 73 is arranged. The photoconductive cells 25 and 26 adapted to rotate coaxially and equivalently with the wheel 74 are attached to the wheel 74. The reference lamp $L_p$ is arranged on the sides of the photoconductive cells 25 and 26 so as to irradiate those cells. A gear 77 is attached to the edge portion of the shaft 72. A transmission gear 78 adapted to engage with the gear 77 at the same rotating speed is fitted over a rotary shaft 79 for rotating the blades. A plurality of rotary worms 80 for rotating the blades are fitted over the rotary shaft 79. A rotary wheel 81 for rotating the blade engages with each rotary worm 80. The blades 21 of the blind are hung down from the rotary wheels 81, respectively. In this mechanism, when the worm 73 rotates once, the rotary worms 80 also rotate once. When the wheel 74 rotates once, the rotary wheels 81 also rotate once. The motor 35 is connected to a tracking apparatus 75 and the photoconductive cells 25 and 26 are also connected to the tracking apparatus 75. The tracking apparatus 75 is connected to the intensity comparing portions $C_1$ and $C_2$ in Fig. 1. The intensity comparing portions $C_1$ and $C_2$ are connected to the intensity detecting portions D in Fig. 1.

Although not shown, the tracking apparatus 75 obviously includes the AND gates 10, 13, 33, and 34, status code converter 37, comparator 38, blade position detector 36, and so on shown in Fig. 1.

In the operation of the embodiment, the intensity of the solar light or the like is detected by the intensity detector portion D. The detection signal from the intensity detector portion D is compared with a reference signal corresponding to a desired intensity by the intensity comparing portions $C_1$ and $C_2$. In comparison with the light intensity, the light direction is detected by the direction detecting portion $P_2$ including the photoconductive cells 25 and 26 and reference lamp $L_p$. The light direction is also tracked. The tracking apparatus 75 respectively receives the signals from the intensity comparing portions $C_1$ and $C_2$ and the signal from the direction detecting portion $P_2$ and processes them and outputs a signal to designate the rotating direction of the blades 21 of the blind. The blade driving section receives the signal to designate the rotating direction of the blades 21. The blade driving portion consists of the motor 35 to drive the blades 21 in their rotating direction and is driven in response to this signal. The rotation of the motor 35 is adjusted by the direction detecting portion $P_2$ including the photo-conductive cells 25 and 26 and reference lamp $L_p$ and by the tracking apparatus 75. The rotations of the photoconductive cells 25 and 26 coincide with the rotations of the blades 21 since the rotations of the worm 73, wheel 74, rotary worms 80, rotary wheels 81 are the same as mentioned above.

According to the embodiment, in the electric blind rotating and tilting the blades of the blind to track the light, the blades and the photoconductive cells to be irradiated by the reference lamp are rotated through a plurality of worms and wheels by only the same rotation amount by the drive motor rotating the blades. Therefore, the blades of the blind can be rotated and tilted so as to track the light.

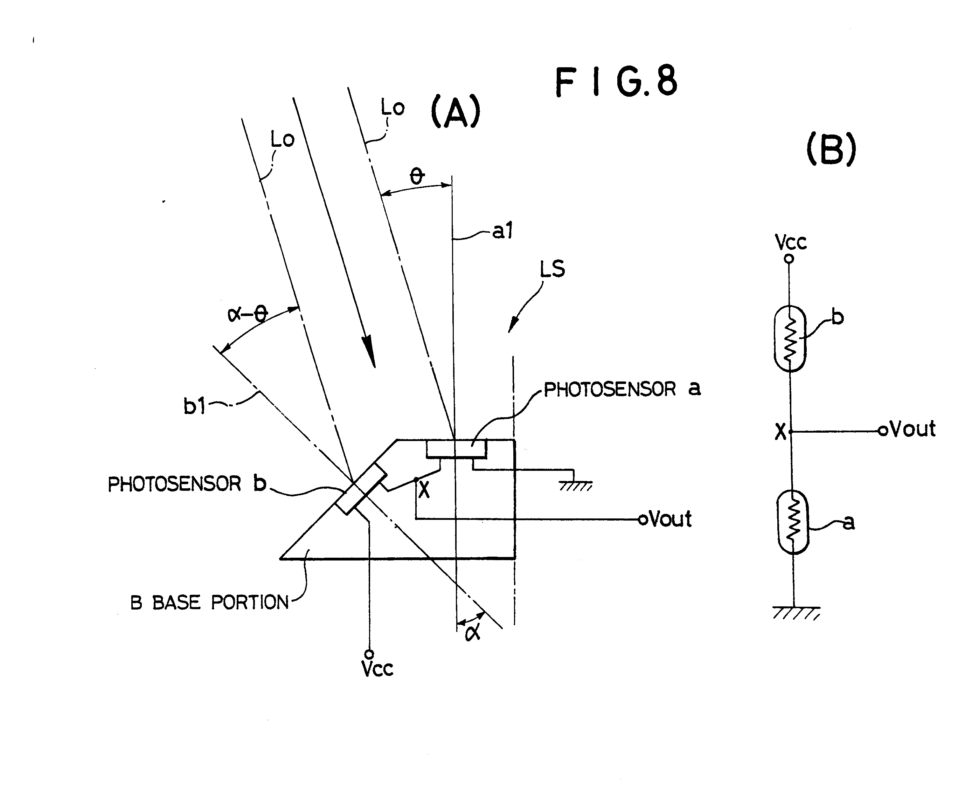

Fig. 8 is an explanatory diagram showing an embodiment of a light direction sensor according to the invention. In the diagram, a first photosensor a is a photoconductive cell such as CdS or the like. A photoelectromotive force cell (solar battery) or the like can be used as the first photosensor as will be explained

' hereafter. Similarly, a second photosensor b is also a photoconductive cell such as CdS or the like. A photoelectromotive force cell or the like can be used as the second photosensor b. The respective photosensors a and b are fixed to a base portion B such that a central axis $a_1$ passing through the center of the first photosensor a crosses a central axis $b_1$ passing through the center of the second photosensor b at a certain angle of $\alpha$.

In the diagram, $V_{cc}$ denotes a terminal for a constant voltage source such as a battery or the like. The terminal $V_{cc}$ is connected to one terminal of the second photosensor b and the other terminal of the photosensor b is connected to one terminal of the first photosensor a. Further, the other terminal of the photosensor a is grounded. A connecting point X of the first and second photosensors a and b is connected to an output terminal $V_{out}$. Fig. 8(B) shows an equivalent circuit of Fig. 8(A).

According to the first embodiment of the light direction sensor having the constitution mentioned above, when the light $L_0$ having an intensity $E_0$ enters at an angle $\theta$ with respect to the first central axis $a_1$, an intensity $E_a$ of the first photosensor a and an intensity $E_b$ of the second photosensor b are expressed respectively as follows.

- 24 -

$$E_a = E_0 \cos\theta \qquad \ldots (1)$$

$$E_b = E_0 \cos(\theta - \alpha) \qquad \ldots (2)$$

A resistance value $R_a$ of the first photosensor a and a resistance value $R_b$ of the second photosensor b are approximated respectively as follows

$$R_a \doteqdot R_{0a} E_a^{-\gamma a} = R_{0a} (E_0 \cos\theta)^{-\gamma a} \qquad \ldots (3)$$

$$R_b = R_{0b} E_b^{-\gamma b} = R_{0b} \{E_0 \cos(\theta - \alpha)\}^{-\gamma b} \qquad \ldots (4)$$

where, $\gamma a$ and $\gamma b$ are characteristic functions and $R_{0a}$ and $R_{0b}$ are initial resistances.

Therefore, assuming that the first and second photosensors a and b have the same characteristics, $R_{0a} = R_{0b} = R_0$ and $\gamma a = \gamma b = \gamma$, expressions (3) and (4) will become

$$R_a \doteqdot R_0 (E_0 \cos\theta)^{-\gamma} \qquad \ldots (5)$$

$$R_b \doteqdot R_0 \{E_0 \cos(\theta - \alpha)\}^{-\gamma} \qquad \ldots (6)$$

A potential $V_{out}$ of the connecting point X becomes

$$V_{out} \doteqdot \frac{R_a}{R_a + R_b} V_{cc} = \left\{\frac{\cos\theta}{\cos\theta + \cos(\theta - \alpha)}\right\}^{-\gamma} V_{cc}$$

$$\ldots (7)$$

where $V_{cc}$ is a power source voltage.

Thus, the output voltage $V_{out}$ of the light direction sensor LS has no relation with the intensity $E_0$ of the light $L_0$, so that the direction of the light $L_0$ can be correctly calculated irrespective of its intensity. It is obvious that the first and second photosensors a and b are not necessarily connected in series in dependence on the arithmetic operating processing method.

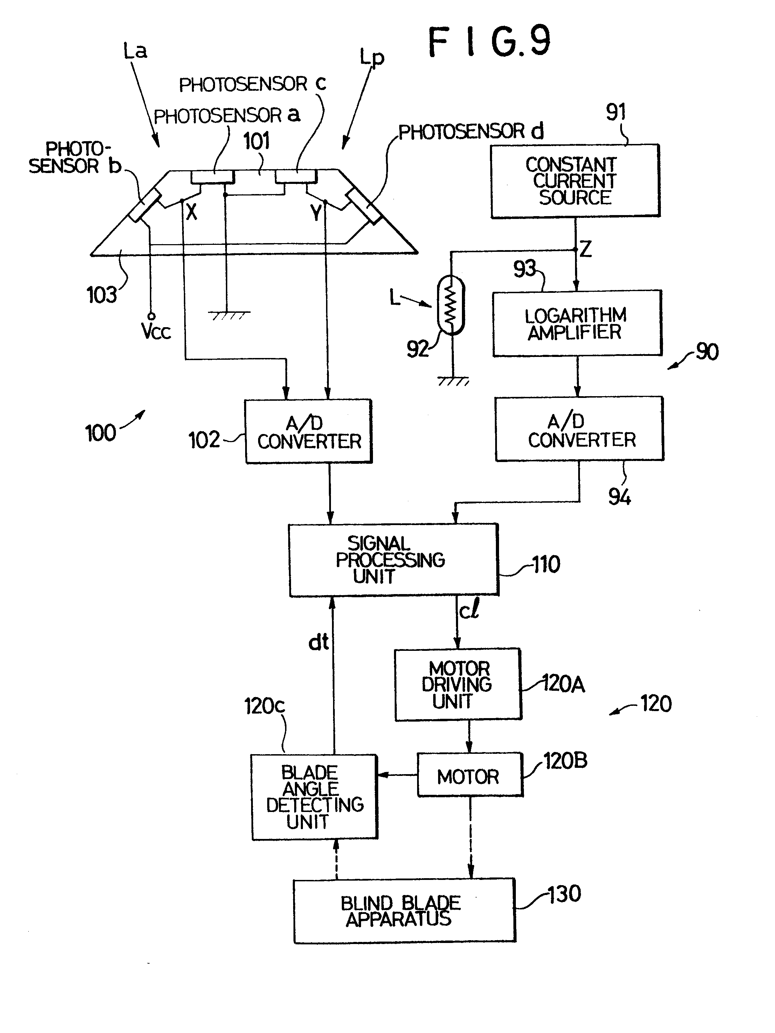

Fig. 9 shows the fourth embodiment of a light tracking type blind apparatus using the light direction sensor of the present invention. A light amount detecting portion 90 at the left upper location in Fig. 9 comprises a constant current source 91 and a photosensor 92 including a photoconductive cell such as CdS or the like which is connected to the current source 91. When the light L such as solar light or the like enters the photosensor 92, the potential of a connecting point Z between the constant current source 91 and the photosensor 92 varies depending on the intensity of the light L.

A logarithm amplifier 93 connected to the connecting point Z is properly connected. An analog/digital (A/D) converter 94 for convering an analog signal to a digital signal is connected to the logarithm amplifier 93. The converter 94 is connected to a signal processing unit 110 such as a microcomputer. The A/D converter 94 constitutes the light amount detecting portion 90.

A voltage of the connecting point Z is digitized by the A/D converter 94 and then subjected to an arithmetic operating process by the signal processing unit 110, so that the illuminance value of the light L is obtained.

On the basis of the resultant illuminance value of the light L, a check is made to see if the current state is evening or afternoon using 3,000 lux as a reference. A check is also made to see if the current state is cloudy or fine using 20,000 lux as a reference.

Since the potential of the connecting point Z changes by the order of about $10^2$ to $10^3$ depending on changes in the amount of light, this should be compressed by the logarithm amplifier 93 or the like as necessary.

A light direction sensor 101 at the left lower location in the diagram comprises: the terminal $V_{cc}$ which is connected to a constant voltage source (not shown); second and fourth photosensors b and d which are connected in parallel with the terminal $V_{cc}$; and first and third photosensors a and c which are respectively connected in series to the photosensors b and d.

The first and third photosensors a and c are fixed to the same plane of a base portion 103. The second photosensor b is fixed to the base portion 103 so as to have an angle for the first photosensor a, and the fourth photosensor d is fixed to the base portion 103 so as to have an angle for the third photosensor c, respectively.

In other words, two light direction sensors LS in Fig. 8(A) are used and one is used for the left direction, e.g., for the light $L_a$ in the morning, and the other is used for the right direction, e.g., for the light $L_p$ in the afternoon.

An A/D converter 102 for converting an analog signal to a digital signal is connected between the connecting point X between the first and second photosensors a and b for the light $L_a$ in the morning and a connecting point Y between the third and fourth photosensors c and d for the light $L_p$ in the afternoon. The converter 102 is connected to the signal processing unit 110. The light direction sensor 101 and the A/D converter 102 constitute a light direction detecting portion 100.

The potentials of the connecting points X and Y change in accordance with the incident angles of lights $L_a$ and $L_p$ entering the light direction detecting portion 100. These output potentials are selected and digitized by the A/D converter 102 and then subjected to arithmetic operating processes by the signal processing unit 110, so that the incident angles of lights $L_a$ and $L_p$ are derived.

A blade driving portion 120 at the right location in the diagram comprises: a motor driving unit 120A connected to the signal processing unit 110; a motor 120B connected to the driving unit 120A; and a blade angle detecting unit 120C such as a potentiometer or the like provided for the motor 120B. The motor 120B rotates the group of blades 21 (Fig. 2) of a blind blade apparatus 130 to the right and left by about 180°. The blade angle detecting section 120C detects the angle of the blades of the blind blade apparatus 130.

According to the fourth embodiment shown in Fig. 9, the signal processing unit 110 sends a control signal cℓ to the motor driving unit 120A on the basis of the signal from the light amount detecting portion 90, thereby rotating the group of blades 21 in the following manner. Namely, when it is determined that the current state is evening, the group of blades 21 of the blind are fully closed as shown in Fig. 2(a). When it is determined to be cloudy, the group of blades 21 are fully opened as shown in Fig. 2(b). The angle of the group of blades 21 to be rotated is detected by the detecting unit 120C. A detection signal dt is sent to the signal processing unit 110. The content of the control signal $c\ell$ is compared with the content of the detection signal dt. When they coincide, the operation of the blade driving portion 120 is stopped by the signal processing unit 110. Practically speaking, the transmission of the control signal $c\ell$ is stopped or the control signal $c\ell$ signifying stop is sent.

When the light L is determined, e.g., the direct rays by the signal processing unit 110 on the basis of the signal from the light amount detecting portion 90, a check is made to see if the light L is the light $L_a$ of the morning or the light $L_p$ of the afternoon by the signal processing unit 110 by the signal from the light direction detecting portion 100. At the same time, the direction of the light $L_a$ or $L_p$ is detected. The signal processing unit 110 then sends the control signal $c\ell$ including the angle of rotation of the group of blades 21 to the motor driving unit 120A, thereby rotating the group of blades 21 so they become perpendicular to the light $L_a$ in the morning or the light $L_p$ in the afternoon as shown in, e.g., Fig. 2(c) or 2(d). The content of the detection signal dt of the angle of the group of blades 21 is compared with the content of the control signal $c\ell$. When they

coincide, the operation of the blade driving portion 120 is stopped by the signal processing unit 110.

In other words, the incident angles of the lights $L_a$ and $L_p$ are obtained by processing the signal from the light direction detecting portion 100 by the signal processing unit 110. The angle of the group of blades 21 corresponding to the incident angles is calculated and sent to the blade driving section 120. Thus, the group of blades 21 are set to the required angle of rotation as shown in Figs. 2(c) and 2(d). In this case, it is obvious that by inverting the group of blades 21 as necessary, the group of blades 21 can be tracked by angles of about 180°.

In Fig. 2, $S_1$ and $S_2$ represent the sun's position in the morning and in the afternoon. Although the embodiment has been described with respect to the case where mainly solar light enters, artificial light such as electric light or the like can be used.

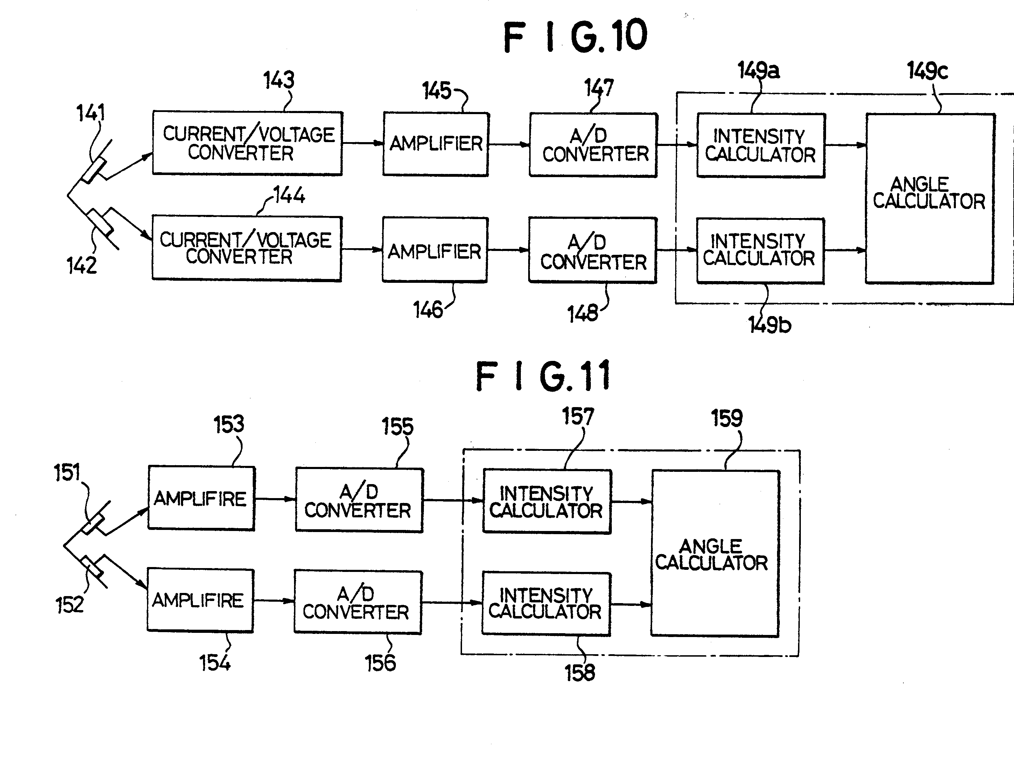

Fig. 10 is a block diagram showing the second embodiment of a light direction sensor in the case where a pair of solar batteries are used as photosensors. A pair of solar batteries 141 and 142 are arranged at angles to each other. Respective outputs of the solar batteries 141 and 142 are converted from the currents to the voltages by converters 143 and 144 and transmitted through amplifiers 145 and 146, respectively. These voltages are further converted to the digital signals by converters 147 and 148, respectively. Thereafter, these signals are subjected to arithmetic operating processes by a pair of intensity calculators 149a and 149b and an angle calculator 149c, thereby detecting the direction of the light.

Fig. 11 is a block diagram showing an embodiment of a light direction sensor in the case where a pair of photodiodes are used as photosensors. A pair of photodiodes 151 and 152 are arranged at angles to each other. Respective outputs of the photodiodes 151 and 152 are transmitted through amplifiers 153 and 154 and converted to digital signals by converters 155 and 156, respectively. Thereafter, these signals are subjected to arithmetic operating processes by a pair of intensity calculators 157 and 158 and an angle calculator 159, thereby detecting the direction of the light.

As described above, the light direction sensor of the present invention can calculate the direction or angle of the light by merely fixing the pair of photosensors at an angle to each other. Therefore, the constitution is simplified and the number of attachment and component parts can be greatly reduced. In particular, when this light direction sensor is applied as means for controlling the blades of the blind, for example, the intensity (light amount) of the solar light and the direction of the sun are always detected and the angle of rotation of the group of blades of the blind can be automatically adjusted in accordance with the light amount and direction of the solar light. Therefore, the direct rays of the sun can be automatically shut-out throughout the day.

In addition, the light direction sensor can be attached by merely fixing the respective photosensors in consideration of the angles of the plurality of photosensors. Therefore, the work of attaching the light tracking type blind apparatus can be simplified and the number of parts reduced.

CLAIMS:

1.     Blind apparatus having adjustable blades and characterised by an intensity detector portion (D) for detecting light intensity, a light direction detector portion (P) for detecting the direction of said light, signal processing means for receiving and processing respective signals from said light direction detecting section and said intensity detector portion and outputting a signal to control rotatary angle of the blades, and a blade driving section ($D_v$) for receiving the control signal of said rotation angles and rotating said blades.

2.     Apparatus as claimed in claim 1, characterised in that the detecting portion detects and digitizes the light intensity, the light direction detector portion detects and digitizes the direction of said light, and the signal processing unit receives and processes respective digital signals from said detecting portions.

3.     Apparatus as claimed in claim 1, characterised in that the intensity detector portion (D) detects solar light intensity and includes an intensity comparing portion ($C_1$) for comparing a detection signal from said intensity detector portion with a reference signal corresponding to a desired intensity, the detector portion (P) detects the position of the sun, the signal processing means receives signals from said intensity comparing portion $(C_1)$ and said direction detecting portion (P) and outputs a signal to designate the desired blade angle.

4. Apparatus as claimed in claim 1 or claim 3, characterised in that said intensity detector portion (D) comprises a photoconductive cell (2) including CdS.

5. Apparatus as claimed in claim 3 or claim 4 when dependent on claim 3, characterised in that said intensity comparing portion has a plurality of intensity comparing units $(C_1, C_2)$.

6. Apparatus as claimed in claim 1 or any of claims 3 to 5, characterised in that said direction detector portion (P) is constituted by a bridge circuit (19) consisting of two resistors (17, 18) and two photoconductive cells (15, 16).

7. Apparatus as claimed in claim 1 or any of claims 3 to 5, characterised in that the direction detecting portion $(P_2$, Fig. 6) comprises a bridge circuit consisting of a reference lamp $(L_p)$ and four photo-conductive cells (25 to 28).

8. Apparatus as claimed in claim 1 or any of claims 2 to 5 or 7, characterised in that a part (25, 26) of said direction detecting portion is rotatable.

9. Apparatus as claimed in claim 8, characterised in that said part (25, 26) of the direction detecting portion is arranged for rotation with said blades.

10. Apparatus for driving blind blades characterised by an intensity detecting portion (D) for detecting light intensity, an intensity comparing portion ($C_1$), a tracking apparatus ($D_v$), and a direction detecting portion ($P_2$) consisting of a photoconductive cell (25) adapted to be interlockingly rotated by only the same amount of rotation as the tilt amount of said blade due to a tilt driving force of the blade and a reference lamp ($L_p$) for irradiating said photoconductive cell, wherein said driving force is transmitted to said photoconductive cell through a worm and a wheel by the same rotation amount as a rotation amount of said blind blade.

11. A light direction sensor characterised by a first photosensor (a) whose output varies depending on incident light, and a second photosensor (b) having the same characteristic as that of said first photosensor and arranged such that its central axis ($b_1$) crosses a central axis ($a_1$) of said first photosensor.

12. A light direction sensor as claimed in claim 11, characterised in that said first and second photosensors are photoconductive cells including CdS.

13. A light direction sensor as claimed in claim 11, characterised in that said first and second photosensors are solar batteries.

14.    A light direction sensor as claimed in claim 11, characterised in that said first and second photo-sensors are photodiodes.

F I G.1

# F I G.2

MORNING

AFTERNOON

$S_1$

$S_2$

(a)    21

(b)    21

(c)    La    21    Lp

(d)    Lp    21

# F I G.3

DETECT INTENSITY — 41

≦ 3,000ℓx — 42

YES "1" — 2a

TILT TO FULL-CLOSED POSITION — 46

"0" NO

≦ 20,000ℓx — 43

YES "1" — 2b

TILT TO FULL-OPEN POSITION — 47

"0" NO

DETECT POSITION OF SUN — 44

LEFT OR RIGHT WITH RESPECT TO BLADES — 45

LEFT — 2d

TILT TO LEFT-SIDE HALF-OPEN POSITION — 48

RIGHT — 2c

TILT TO RIGHT-SIDE HALF-OPEN POSITION — 49

# FIG.4

# FIG.6

# FIG.5

DETECT INTENSITY — 41

≦ 3,000ℓx — 42

YES "1" — 2a

TILT TO FULL-CLOSED POSITION — 46

"0" NO

≦ 20,000ℓx — 43

YES "1" — 2b

TILT TO FULL-OPEN POSITION — 47

"0" NO

DETECT DIRECTION OF SUN — 44

LEFT — 2d

RIGHT — 2c

TILT TO TRACK TO RIGHT — 49

TILT TO TRACK TO LEFT — 48

# FIG.7

INTENSITY DETECTOR PORTION

D

INTENSITY COMPARING PORTION

$C_1, C_2$

TRACKING APPARATUS

75

26

25

Lp

77

74

73

72

35

78

79

80

81

80

81

80

81

21

21

21

# F I G.8

## (A)

Lo

Lo

$\theta$

a1

LS

$\alpha - \theta$

b1

PHOTOSENSOR a

PHOTOSENSOR b

X

oVout

B BASE PORTION

$\alpha$

Vcc

## (B)

Vcc

b

X

oVout

a

7/9

0210049

# FIG.9

# F I G.10

# F I G.11

0210049